Europäisches Patentamt

European Patent Office

Office européen des brevets

(19)

(11) Veröffentlichungsnummer: **0 009 582**
**B1**

(12) **EUROPÄISCHE PATENTSCHRIFT**

(45) Veröffentlichungstag der Patentschrift: **22.06.83**

(51) Int. Cl.³: **G 01 B 11/24, G 01 B 11/00**

(21) Anmeldenummer: **79102995.2**

(22) Anmeldetag: **16.08.79**

(54) **Vorrichtung zum Messen des Abstandes eines Punktes auf einer Oberfläche eines Objekts von einer Nullebene.**

(30) Priorität: **29.09.78 DE 2842669**

(43) Veröffentlichungstag der Anmeldung:
**16.04.80 Patentblatt 80/8**

(45) Bekanntmachung des Hinweises auf die Patenterteilung:
**22.06.83 Patentblatt 83/25**

(84) Benannte Vertragsstaaten:
**BE CH FR GB NL**

(56) Entgegenhaltungen:
**DE - A - 2 702 452**
**DE - A - 2 810 192**
**FR - A - 2 260 081**
**US - A - 3 692 414**
**US - A - 3 840 739**
**US - A - 3 986 774**

(73) Patentinhaber: **SIEMENS AKTIENGESELLSCHAFT**
**Berlin und München Wittelsbacherplatz 2**
**D-8000 München 2 (DE)**

(72) Erfinder: **Bodlaj, Viktor, Dr.**
**Werinherstrasse 69**
**D-8000 München 90 (DE)**

Courier Press, Leamington Spa, England.

### Vorrichtung zum Messen des Abstandes eines Punktes auf einer Oberfläche eines Objekts von einer Nullebene

Die vorliegende Erfindung betrifft eine Vorrichtung zum Messen des Abstandes eines Punktes der Oberfläche eines Objekts von einer Nullebene nach dem Oberbegriff des Patentanspruchs 1 und wie sie beispielsweise aus der DE—A—27 44 130 hervorgeht.

Eine Vorrichtung der genannten Art wird so betrieben, daß das zu vermessende Objekt so im Bereich des Laserstrahlbündels angeordnet wird, daß eine Oberfläche dieses Objekts von dem periodisch abgelenkten Strahlenbündel laufend überstrichen wird und daß die Visierlinie des Detektors diese Oberfläche innerhalb des Bereiches, der vom Lichtstrahlbündel überstrichen wird, trifft.

Die Oberfläche des Objektes reflektiert das auftreffende Licht diffus nach allen Seiten. Das Licht wird also auch stets in eine Richtung reflektiert, die parallel zur Visierlinie ist. Das das auftreffende Lichtstrahlbündel aber einen geringen Querschnitt aufweist, weist auch das in die besagte Richtung reflektierte Licht einen ebensolchen Querschnitt auf und aus diesem Grunde trifft das in diese Richtung gestreute Licht den Detektor in der Regel nicht.

Es gibt aber eine präzise Stelle auf der Oberfläche des Objektes, von der aus das in die besagte Richtung gestreute Licht genau auf den Detektor trifft und von diesem registriert wird. Aus dem Winkel zwischen dem auf diese präzise Stelle auftreffenden Strahlenbündel und einer festen Anfangsrichtung des abgelenkten Lichtstrahlbündels sowie der vorgebbaren Ablenkfrequenz für das Lichtstrahlbündel läßt sich der Abstand dieser präzisen Stelle auf der Oberfläche des Körpers von einer Nullebene ermitteln. Die Nullebene geht dabei durch den Schnittpunkt des in die Anfangsrichtung ausgestrahlten Lichtstrahlbündels mit der Visierlinie des Detektors. Ihre Flächennormale verläuft parallel zur Winkelhalbierenden des Winkels zwischen des Visierlinie und dem in Anfangsrichtung ausgesandten Strahlenbündel.

Eine Messung mit einer Vorrichtung der eingangs genannten Art ist unkritisch, wenn die Oberfläche des auszumessenden Objekts eben ist und parallel zur Null-Ebene verläuft. Probleme können jedoch auftreten, wenn die Oberfläche des Objekts nicht parallel zur Null-Ebene verläuft. Das vom auftreffenden Lichtstrahlbündel gestreute Licht hat nämlich nicht in jeder Richtung die gleiche Intensität, sondern nimmt mit zunehmendem Winkel von einer Richtung, bei der maximale Intensität herrscht, auf Null ab. In der Regel ist diese Richtung, in der das Streulicht maximale Intensität aufweist, gleich der Richtung, in die das auf die .Oberfläche auftreffende Strahlenbündel reflektiert würde, wenn die Oberfläche ideal spiegelte. Dies ist aber nur der in der Regel auftretende Fall, die maximale Lichtintensität des Streulichts kann auch in einer anderen Richtung liegen. Für der vorliegende Erfindung ist dies aber ohne Bedeutung.

Je nach Schräglage der Oberfläche bezüglich der Null-Ebene bzw. der Visierlinie kann daher das vom Detektor registrierte Streulicht eine größere oder kleinere Intensität aufweisen. Ab einem bestimmten Winkel zwischen der Visierlinie und der Richtung, in welcher das Streulicht maximaler Intensität abgestrahlt wird, ist die Intensität des Streulichts in Richtung Visierlinie so gering, daß es vom Detektor nicht mehr als solches registriert werden kann.

Es kann daher besonders bei stark unebenen Oberflächen, beispielsweise bei Flächenprofilen, vorkommen, daß die Messung aufgrund der vorstehend geschilderten Streulichtcharakteristik und eines ungünstigen Neigungswinkels des auf der präzisen Stelle auftreffenden Lichtstrahlbündels zur Oberfläche gestört und daher die Vermessung unterbrochen wird.

Diese Schwierigkeit könnte vermieden werden, wenn die Visierlinie von beiden Seiten beleuchtet werden könnte, wie dies bei dem Gerät zum Ermitteln das Verlaufs einer erhabenen Kante ohne Schatteninterferenz der Fall ist, das in der US—A—3 840 739 beschrieben ist. Bei diesem Gerät, das auf einem völlig anderen Meßprinzip beruht, wird der Oberfläche des zu vermessenden Objekts Licht aus verschiedenen Richtungen zugeführt. Dies geschieht über mehrere Lichtleiter, deren objektseitige Enden in den verschiedenen Richtungen ausgerichtet sind. Eine Möglichkeit zur Lichtablenkung, wie sie bei einer Vorrichtung der eingangs genannten Art erforderlich ist, ist bei dem Gerät nicht vorhanden.

Es ist die Aufgabe der vorliegenden Erfindung, eine Vorrichtung der eingangs genannten Art dahingehend zu verbessern, daß das die Visierlinie treffende Lichtstrahlenbündel so umschaltbar ist, daß es die Visierlinie entweder von der einen oder von der anderen Seite trifft, wodurch gewährleistet wird, daß auch stark unebene Oberflächen, insbesondere Profile, ohne Störung und lückenlos vermessen werden können.

Diese Aufgabe wird durch die im kennzeichnenden Teil des Patentanspruchs 1 angegebenen Merkmale gelöst.

Bevorzugte und vorteilhafte Ausgestaltungen der Erfindung gehen aus den Unteransprüchen 2 und 3 hervor.

Mit einer erfindungsgemäßen Vorrichtung können jetzt sämtliche Profile sicher und störungsfrei vermessen werden. Dabei ist die Vorrichtung sehr einfach aufgebaut und kann kostengünstig hergestellt werden.

Ein Ausführungsbeispiel der Erfindung ist in dem Figuren dargestellt und wird im folgenden näher erläutert. Es zeigen

Figur 1 in schematischer Darstellung eine Seitenansicht eines Ausführungsbeispiels mit einem drehbaren Doppelspiegel und zwei fest angeordneten zusätzlichen Spiegeln,

Figur 2 eine Detailseitenansicht des drehbaren Doppelspiegels,

Figur 3 eine Detailansicht eines verschiebbaren Doppelspiegels aus zwei gekreuzten Spiegeln mit Blickrichtung parallel zu den Spiegelflächen,

Figur 4 eine Ansicht des in Figur 3 dargestellten Doppelspiegels mit Blickrichtung senkrecht auf einen Spiegel und parallel zum anderen,

Figur 5 die Ansicht eines verschiebbaren Doppelspiegels mit zwei gekreuzten Spiegelflächen, welcher aus zwei Umlenkwürfel aufgebaut ist, wobei die Blickrichtung parallel zu beiden Spiegelflächen gerichtet ist,

Figur 6 eine Ansicht des in Figur 5 dargestellten Doppelspiegels mit Blickrichtung senkrecht zur Achse 40,

Figur 7 das Ausführungsbeispiel nach Figur 1 in vereinfachter Darstellung, wo zwei Strahlteilerspiegel vorgesehen sind.

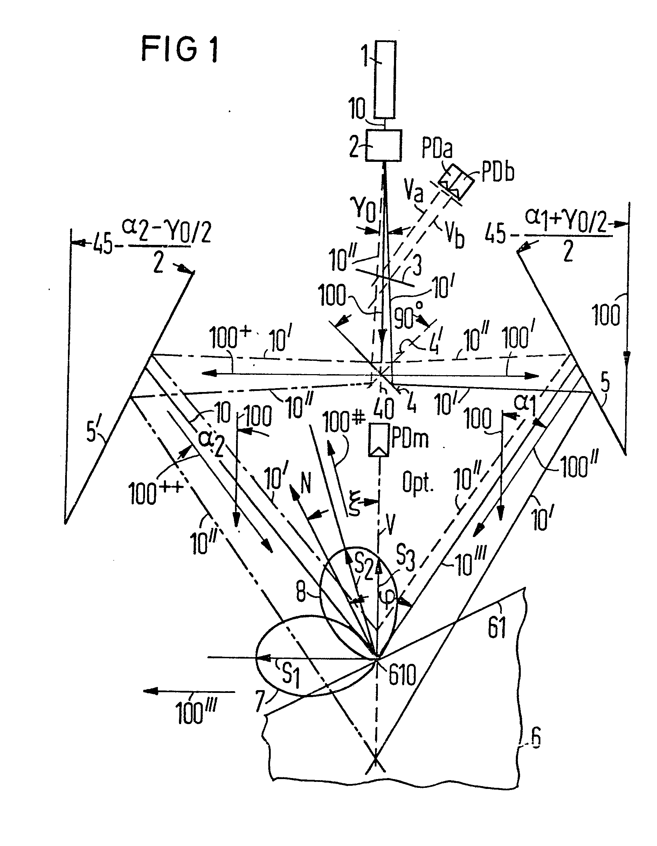

In der Figur 1 ist mit 1 einer Laser bezeichnet, welcher einen Laserstrahl 10 aussendet, in welchem ein Strahlablenker 2 angeordnet ist, der den Laserstrahl 10 periodisch aus seiner ursprünglichen vorgebbaren Richtung 100 nach links bzw. rechts ablenkt, so daß der Laserstrahl einen Winkelbereich $\gamma_0$ überstreicht. Der maximal nach links abgelenkte Laserstrahl ist mit 10' und der maximal nach rechts abgelenkte Laserstrahl mit 10'' bezeichnet. Im Bereich des abgelenkten Laserstrahlbündels befindet sich ein Strahlteilerspiegel 3, welcher einen Anteil des vom Strahlablenker abgegebenen Laserlichts auf zwei Fotodetektoren PDa und PDb lenkt. Beide Fotodetektoren sind Fotodetektoren mit Visierlinie. Die Visierlinie des Fotodetektors PDa ist mit Va bezeichnet und ist so ausgerichtet, daß sie mit der Achse des vom Strahlteilerspiegel 3 reflektierten rechten Laserstrahlbündel 10'' zusammenfällt. Die Visierlinie des Fotodetektors PDb ist mit Vb bezeichnet und ist so ausgerichtet, daß sie mit der Achse des vom Strahlteilerspiegel 3 reflektierten linken Laserstrahl 10' zusammenfällt. Somit registrieren die beiden Fotodetektoren PDa bzw. PDb nur das Licht der Laserstrahlen 10'' bzw. 10'. Ein Laserstrahl, welcher zu einem bestimmten Zeitpunkt zwischen den beiden Strahlen verläuft, wird nicht registriert.

Das periodisch abgelenkte Laserstrahlbündel, welches im folgenden mit 10', 10'' bezeichnet wird und bei welchem die Laserstrahlbündel 10' und 10'' die Grenzstrahlen für das abgelenkte Bündel bilden, fällt auf einem im Winkel von 45° zur Richtung 100 angeordneten Spiegel 4, welcher das Bündel um 90° in die Richtung 100' (in der Figur 1 also nach rechts) auf einen Spiegel 5 umlenkt. Die Spiegelebene des Spiegels 5 umschließt mit der Richtung 100 einen Winkel von

$$45° - (\alpha_1 + \gamma_0/2)/2$$

ein, wobei $\alpha_1$ ein im wesentlichen frei wählbarer Winkel zwischen 0° und 90° bedeutet, der aber vorzugsweise kleiner als 45° gewählt wird.

Von diesem Spiegel 5 wird das Lichtstrahlbündel 10', 10'' in eine Richtung 100'', die mit der Richtung 100 genau den Winkel $\alpha_1$ einschließt, umgelenkt. Ein Meßfotodetektor PDm mit Visierlinie V ist so angeordnet, daß die Visierlinie V vom Strahlenbündel 10', 10'' geschnitten wird, und zwar so, daß der zwischen Position 10' und 10'' hin- und herpendelnde Laserstrahl die Visierlinie V stets schneidet. Ein besonders einfacher Fall liegt dabei vor, wenn der Laserstrahl in einer Ebene abgelenkt wird, wie es beispielsweise die Zeichenebene in der Figur 1 darstellt. Dann liegt auch die Visierlinie V in der gleichen Ebene. Es sei aber darauf hingewiesen, daß dies nicht notwendig ist, sondern daß der Laserstrahl auch dreidimensional abgelenkt werden kann. Es muß nur dafür Sorge getragen werden, daß die Visierlinie stets von dem sich bewegenden Laserstrahl geschnitten wird.

In der Figur 1 ist die Visierline V speziell noch so angeordnet, daß sie parallel zur Richtung 100 ist und mit der Achse des Laserstrahls 10 zusammenfällt. Folglich schließt die Visierlinie mit der Richtung 100'' einen Winkel von $\alpha_1$ ein.

Ein zu vermessendes Objekt 6 ist im Laserstrahlbündel 10', 10'' angeordnet und wird auch von der Visierlinie V getroffen.

Die dem Laserstrahlbündel und der Visierlinie V zugeordnete Oberfläche 61 des Objekts 6 ist nach links geneigt, so daß die Normale N dieser Oberfläche mit der Visierlinie V einen Winkel $\xi$ einschließt. Die Visierlinie V durchströßt die Oberfläche 61 in einer Stelle 610, die der eingangs erwähnten präzisen Stelle entspricht. Zu einem bestimmten Zeitpunkt ist das abgelenkte Laserstrahlbündel so gerichtet, daß es die Stelle 610 trifft. In der Figur 1 ist in einer Art Momentaufnahme dieses Laserstrahlbündel dargestellt und mit 10''' bezeichnet. Es schließt mit der Normalen N einen Winkel $\varphi$ ein Wäre die Oberfläche 61 des Objekts 6 ideal spiegelnd, würde das Laserstrahlbündel 10''' in Richtung 100''', welche mit der Normalen N ebenfalls den Winkel $\varphi$ einschließt, reflektiert. Da diese Oberfläche 61 aber nicht ideal reflektiert, entsteht auch Streulicht, d.h. es wird auch Licht in andere Richtungen abgestrahlt, dabei ist aber für gewöhnlich die Intensität des in eine bestimmte Richtung gestreuten Lichtes um so kleiner, je größer der Winkel zwischen dieser Richtung und der Richtung 100''' ist. Danach ist für gewöhnlich die Intensität des in de Richtung 100''' gestreuten Lichtes am größten. Die keulenförmige Kurve 7 ist ein Schnitt durch die Intensitätsfläche, welche die Spitzen der Richtungsvektoren von der Länge der Intensität des gestreuten Lichtes aufspannen.

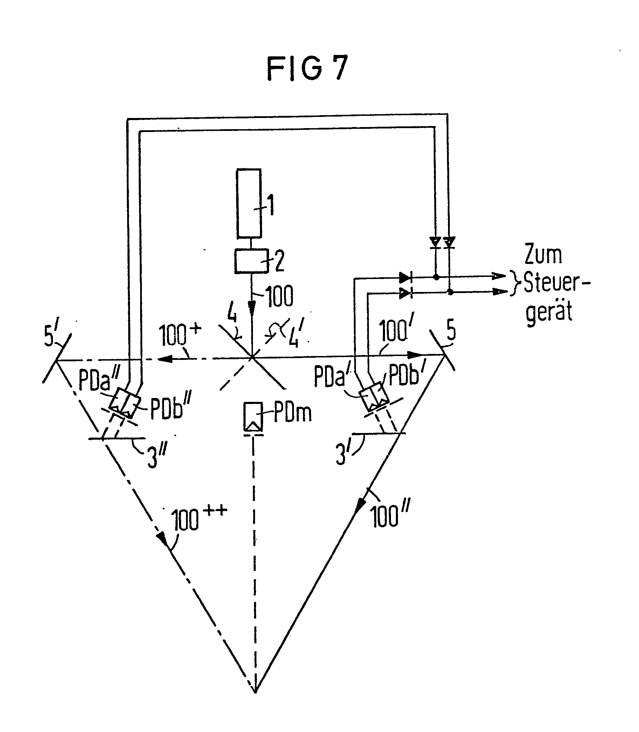

Es sei an dieser Stelle ausdrücklich darauf hingewiesen, daß solche keulenförmige Intensitätsrichtungsverteilungen, wie sie die Figur 7 darstellt, einen typischen Fall darstellen, der in der Regel auftritt. Die Keule ist um so schlanker, d.h. in Richtung 100''' um so langgestreckter, je schlechter die Streueigenschaften der Oberfläche 61 sind oder anders ausgedrückt, je besser ihre Spiegeleigenschaften sind. Gleichmäßige Streuung in alle Richtung, unabhängig von der Richtung des einfallenden Lichtstrahlbündels 10''' wäre der Fall idealter Streuung und die Keule 7 würde in einen Halbkreis um die Stelle 610 entarten.

Geht man aber von dem Normalfall der Richtungsverteilung des Streulichtes, wie sie in der Kurve 7 dargestellt ist, aus, so erkennt man, daß in Richtung des Meßfotodetektors, d.h. parallel zur Visierlinie, kein Licht gestreut wird. Der Meßfotodetektor PDm empfängt also kein Streulicht, da die Intensität in diese Richtung im wesentlichen gleich Null ist. Damit kann aber auch keine Messung erfolgen.

Um nun aber auch für diesen ungünstigen Fall noch eine Messung möglich zu machen, sieht die vorliegende Erfindung vor, daß die vorgebbare Richtung 100'' und eine Richtung, die zur Visierlinie V parallel ist, zueinander veränderbar sind.

In der Figur 1 wird dazu die Spiegelfläche 4' durch eine um 90° gedrehte Spiegelfläche 4' ersetzt, so daß das abgelenkte Lichtstrahlbündel 10', 10'' jetzt um 90° nach links in die Richtung 104' abgelenkt ist. Das so abgelenkte Lichtstrahlbündel 110', 110'' trifft auf einen Spiegel 5', dessen Spiegelebene mit der Richtung 100 einen Winkel von

$$45° - (\alpha_2 - \gamma_0/2)/2$$

einschließt, und welcher das Lichtstrahlbündel 10', 10'' zur Visierlinie V hinlenkt. Der Winkel $\alpha_2$ ist dabei so zu wählen, daß das Grenzstrahlenbündel 10' die Oberfläche 61 auf der einen Seite und das Grenzstrahlenbündel 10'' die Oberfläche 61 auf der anderen Seite der Stelle 610 trifft. Im übrigen gilt analoges auch für die Grenzstrahlbündel 10', 10'', welche vom Spiegel 5 umgelenkt werden.

Die Richtung, in die das Lichtstrahlbündel 10', 10'' vom Spiegel 5' abgelenkt wird, ist in der Figur 1 mit 100++ bezeichnet. Das Lichtstrahlbündel, das zu einem bestimmten Zeitpunkt die Stelle 610 trifft, ist mit 10+ bezeichnet. Bei ideal reflektierender Oberfläche 61 würde dieses Lichtstrahlbündel in die Richtung 100≠ reflektiert.

Da die Oberfläche 61 aber die schon vorstehend besprochenen streuenden Eigenschaften aufweist, wird das Licht vom Lichtstrahlbündel 10+ nach allen Richtungen gestreut, mit einer richtungsabhängigen Intensität, die durch die keulenförmige Kurve 8 angedeutet ist, gestreut. Die Kurve 8 ist an ihrer Form ähnlich der Kurve 7. Man kann sich die Kurve 8 so entstanden denken, daß die Kurve 7 um die Stelle 610 nach rechts verdreht worden ist, wobei der ursprüngliche Vektor S1, dessen Länge die maximale Streulichtintensität angibt, und der in die Richtung des ideal reflektierten Lichtstrahls 10''', also in die Richtung 100''' zeigt, in den Vektor S2, welcher in die Richtung 100≠ zeigt, übergeführt, wurde.

Es sei betont, daß die hier geschilderte Betrachtung unter der vereinfachenden Voraussetzung gemacht wurde, daß die Streulichtkeule 7 unabhängig von der Richtung des Vektors S1 bezüglich der Normalen N ist. In Wirklichkeit wird die Kurve 8 in ihrer Form gegenüber der Kurve 7 etwas verändert sein, jedoch kommt es im Augenblick lediglich auf eune quantitative Betrachtung an.

So ist quantitativ durchaus zu erkennen, daß jetzt vom Lichtstrahlbündel 10+ ein Anteil mit ziemlich großer Intensität von der Oberfläche 61 parallel zur Visierlinie V gestreut wird. Dieses Intensität und die Richtung dieses Anteils sind durch den Vektor $S_3$ in der Figur 1 veranschaulicht. Quantitativ mag die Länge dieses Vektors $S_3$ und damit die Intensität des in diese Richtung gestreuten Lichtes etwas kleiner oder auch etwas größer sein, jedoch wird sie in der Größenordnung der Länge des Vektors $S_2$ liegen. Da das Lichtstrahlbündel 10+ wie das Lichtstrahlbündel 10''' auf die Stelle 610 trifft, gelangt das in Richtung des Vektors $S_3$ abgestrahlte Licht in den Meßfotodetektor PDm und wird wegen seiner ausreichend hohen Intensität von diesem registriert, was im Fall des Lichtstrahlbündels 10''' nicht der Fall war.

Das für den Normalfall einer keulenförmigen Intensitätsverteilungskurve angegebene Prinzip ist für jede beliebige Intensitätsverteilungskurve mit Erfolg anwendbar.

In allen Fällen reicht es dabei aus, wenn die Richtung, in welche die Visierlinie zeigt, feststeht und die Vorgebbare Richtung relativ zur feststehenden Richtung veränderbar ist.

Für die meisten zur vermessenden Profile genügt es, wenn der Winkelbetrag zwischen einer einstellbaren vorgebbaren Richtung und der Richtung, in welcher die Visierlinie zeigt, für jede einstellbare Richtung der gleiche ist. Die Figur 1 in ihrer Darstellung liefert dazu ein Beispiel, weil dort $\alpha_1 = \alpha_2$ gewählt ist.

Die Veränderung der beiden relativ zueinander veränderbaren Richtungen kann durch Veränderung der Lage der Lichtquelle und/oder des Meßdetektors herbeigeführt werden. Es ist jedoch vorteilhaft, anstelle dessen zur Veränderung der in Rede stehenden Richtungen einen im Bereich des Lichtstrahlbündels angeordneten Strahlrichtungsumlenker vorzusehen, wie dies im Ausführungsbeispiel nach Figur 1 mit den Spiegeln 4 bzw. 4' und 5 und 5' bereits verwirklicht ist.

Der Strahlumlenker nach Figur 1 umfaßt die im Bereich des Lichtstrahlbündels 10', 10'' eingefügte bewegliche Spiegelfläche 4 und im Bereich des von dieser eingefügten beweglichen Spiegelfläche reflektierten Lichtstrahlbündels angeordnete feste Spiegelfläche 5, welche das auf sie treffende Lichtstrahlbündel 10, 10' zur Visierlinie V hinlenkt. Die bewegliche Spiegelfläche 4 ist um eine Drehachse 40, welche in der Figur 1 senkrecht auf der zweiten Ebene steht, drehbar gelagert, so daß sie wahlweise in den Bereich des Lichtstrahlbündels hinein- oder aus ihm heraus drehbar ist. Wird die Spiegelfläche 4 aus dem Lichtstrahlbündel 10', 10'' herausgedreht, so wird eine zweite Spiegelfläche 4' in das Strahlenbündel 10', 10'' hineingedreht, welche es in die entgegengesetzte Richtung als vorher ablenkt. Im Beriech dieses in die entgegengesetzte Richtung reflektierten Lichtstrahlbündels 10', 10'' ist die Spiegelfläche 5' fest angeordnet, welche das auftreffende Lichtstrahlbündel wieder zur Visierlinie hinlenkt, jetzt aber von einer anderen Seite als vorher.

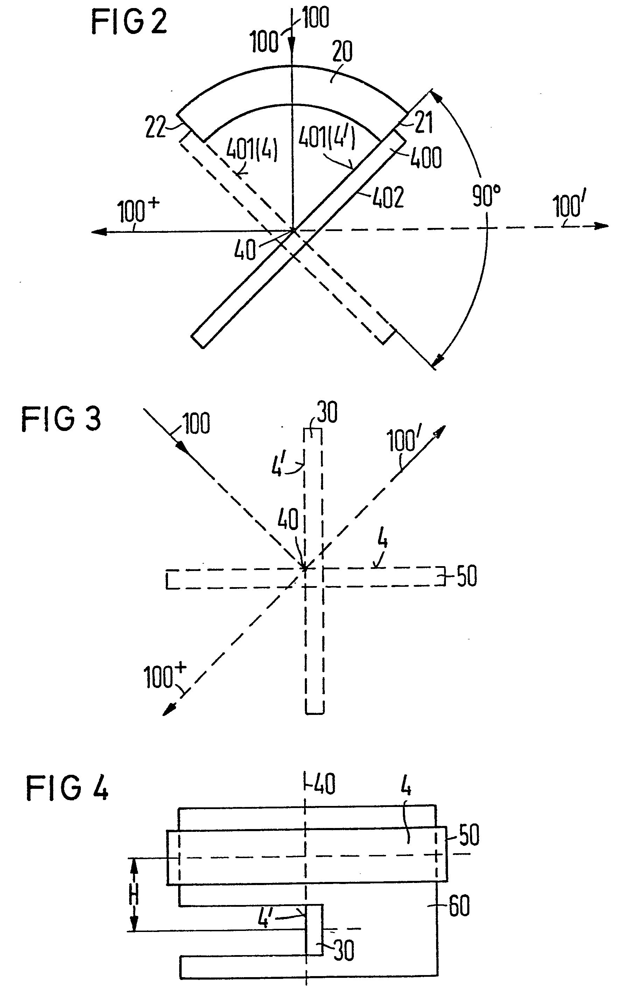

Eine Verwirklichung der beigen beweglichen Spiegelflächen 4 und 4' ist in der Figur 2 dargestellt. Die Anordnung besteht im wesentlichen aus einer plan-parallelen Platte 400, mit einer ebenen Spiegelfläche 401, die reflektierende Spiegelflächen 4 bzw. 4' bildet. Diese Platte 400 ist um die Drehachse 40, welche in der Spiegelfläche 401 liegt (in der Figur 2 wieder vertikal zur Zeichenebene), drehbar gelagert. Ein Lichtstrahlbündel, welches in der Richtung 100 auf die Spiegelfläche 401 auftrifft, wird, da diese um 45° zur Richtung 100 geneigt ist, um 90° in die Richtung $100^+$ umgelenkt. Wird die Platte 400 um 90° im Uhrzeigersinn gedreht, so daß sie die gestrichelt eingezeichnete Lage einnimmt, so wird ein in der Richtung 100 ausgesandtes Lichtstrahlbündel um 90° nach rechts in die Richtung 100' reflektiert, also in der genau entgegensetzten Richtung als die Richtung $100^+$.

Damit die beiden so definierten Lagen der Platte 100 genau eingehalten werden können, ist ein Drehbegrenzer 20 vorgesehen, an dessen Stirnflächen 21 und 22 die Spiegelfläche 401 bei den beiden definierten Lagen stumpf anliegt.

Auf diese Weise sind also die beiden Spiegelflächen 4 und 4' nach Figur 1 mit einer einzigen Spiegelfläche 401 realisiert.

Eine andere Möglichkeit bestünde darin, die Platte 400 entgegen dem Uhrzeigersinn um 90° zu drehen, wodurch die Spiegelfläche 401 der Platte 400 aus dem Lichtstrahlbündel aus der Richtung 100 herausgedreht, dafür aber die rückwärtige Fläche 402 der Platte in das Strahlenbündel hineingedreht würde. Wenn diese rückwärtige Fläche 402 ebenfalls als Spiegelfläche ausgebildet ist, wäre auch hier die Funktion als Umlenker gegeben. Der Drehbegrenzer 50 müßte allerdings dann an anderer Stelle angebracht werden. Bei dieser Realisierung sind die beiden Spiegelflächen 4 bzw. 4' nach Figur 1 durch die Spiegelflächen 402 bzw. 401 der Platte 400 gegeben.

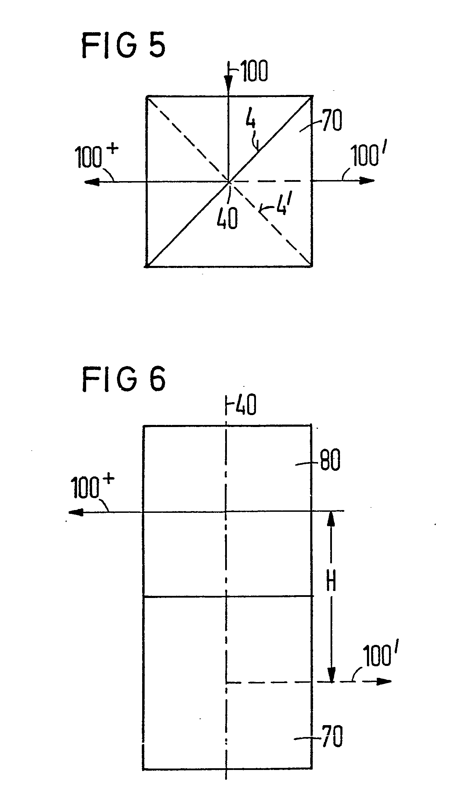

In den Figuren 3 und 4 ist ein Ausführungsbeispiel für einen Umlenker mit einer beweglichen Spiegelfläche dargestellt, bei welcher die Spiegelfläche verschiebbar gelagert ist, so daß die wahlweise in den Bereich des Lichtstrahlbündels hinein- oder aus ihm herausschiebbar ist. Dieses Ausführungsbeispiel ist so ausgebildet, daß ein erster Spiegel 30 mit der Spiegelebene 4' senkrecht zu einem daneben liegenden zweiten Spiegel mit der Spiegelebene 4 angeordnet ist. Beide Spiegel 30 und 50 sind längs der Achse 40 (siehe Figur 1) welche senkrecht auf der Richtung 100 steht, verschiebbar gelagert, und so angeordnet, daß ein Lichtstrahlbündel aus der Richtung 100 im Winkel von 45° auf die jeweilige Spiegelebene 4' bzw. 4 auftrifft. Figur 4 zeigt das Ausführungsbeispiel aus einer Ansicht senkrecht zur Richtung 100 und Figur 5 das Ausführungsbeispiel aus einer Ansicht parallel zur Richtung 100. Aus der Figur 4 ist zu entnehmen, daß ein Lichtstrahlbündel aus der Richtung 100 von der Spiegelfläche 4' in die Richtung 100 durch und von der Spiegelfläche 4 in die Richtung 100' reflektiert wird. Aus der Figur 5 ist zu entnehmen, daß beide Spiegel in einer Spiegelhalterung 60 befestigt sind. Durch Verschieben des Spiegelhalters 60 parallel zur Achse 40 kann wahlweise der Spiegel 50 oder der Spiegel 30 in den Bereich des Lichtstrahlbündels 10', 10'' eingefügt werden, wodurch wahlweise eine Ablenkung in die Richtung 100' oder in die Richtung 100' ermöglicht wird.

Ein zweites Ausführungsbeispiel mit verschiebbarer Spiegelfläche ist in den Figuren 5 und 6 dargestellt. Dort sind die Spiegelflächen 4 bzw. 4 die Spiegelflächen von zwei beneneinänder angeordneten, jeweils aus zwei Prismen zusammengesetzten Würfelspiegeln 70 und 80 gebildet. Wieder sind beide Spiegelebenen 4 und 4' senkrecht zueinander angeordnet und längs der Achse 40 vertikal verschiebbar.

Ein Lichtstrahlbündel aus der Richtung 100 trifft beide Spiegelflächen jeweils im Winkel von 45°. Die Spiegelfläche 4 lenkt dabei dieses Lichtstrahlbündel um 90° in die Richtung $100^+$ und die Spiegelfläche 81 um 90° in die Richtung 100' um. Durch eine Verschiebung um die Strecke H', welche der Strecke H in Figur 5 entspricht, parallel zur Achse 40 kann wahlweise der Spiegel 70 oder der Spiegel 80 in den Bereich des Lichtstrahlbündels gebracht werden.

In der Figur 7 ist noch einmal vereinfacht die Anordnung nach Figur 1 dargestellt, wobei aber jetzt der teildurchlässige Spiegel 3 und die beiden Fotodetektoren PDa, PDb durch die teildurchlässigen Spiegel 3' bzw. 3'' und durch die beiden Fotodetektoren PDa', PDb' bzw. PDa'', PDb'' ersetzt sind. Der Strahlteilerspiegel 3 ist in den vom Spiegel vom umgelenkten Lichtstrahlbündel 1', 10'' angeordnet, während der Spiegel 3'' im Lichtstrahlbündel 10', 10'' angeordnet ist, welches vom Spiegel 5' reflektiert wird. Der Fotodetektor PDa empfängt nur einen Lichtanteil vom Lichtstrahlbündel 10'', welcher vom Spiegel 3' reflektiert wird, während der Fotodetektor PDb' nur einen Lichtanteil vom Lichtstrahlbündel 10', der ebenfalls am Spiegel 3' reflektiert wird, empfängt. Analoges gilt für die Fotodetektoren, PDa'', PDb'' und den Spiegel 3''. Die Signale der vier Fotodetektoren werden über Dioden D1 bis D4 zu einem nicht dargestellten Steuergerät geführt und dort verarbeitet. Mit dieser Anordnung ist eine getrennte Kontrolle der Nullebene und Ablenkamplitude für die beiden Hauptrichtungen 100'' und 100$^{++}$ ermöglicht.

## Patentansprüche

1. Vorrichtung zum Messen des Abstandes eines Punktes auf der Oberfläche eines Objekts von einer Nullebene, mit einer Lichtquelle zur Erzeugung eines scharf gebündelten Lichtstrahlenbündels in einer borgebaren Richtung, mit einem in Strahlengang des Lichtstrahlenbündels angeordneten Strahlablenker zum periodischen Ablenken des Lichtstrahlenbündels aus der bestimmten Richtung, und mit einem entlang einer den Meßpunkt enthaltenden Visierlinie eine scharf gebündelte Empfangscharakteristik aufweisenden licht-empfindlichen Detektor (Detektor mit Visier-linie), wobei die Lichtquelle mit dem Strahlablenker und der Detektor mit Visierlinie relativ zueinander so angeordnet sind, daß das abgelenkte Lichtstrahlenbündel stets die im Raum feststehende Visierlinie trifft, dadurch gekennzeichnet, daß eine in dem Bereich des Lichtstrahlenbündels angeordnete Strahlrichtungsumlenkeinrichtung (4, 5, 4', 5') vorgesehen ist, die zumindest eine in dem Bereich des Lichtstrahlenbündels angeordnete oder in diesen einbringbare bewegliche Spiegelfläche (4, 4') zum wahlweisen Umlenken des Lichtstrahlenbündels in einander entgegengesetzte Richtungen (100', 100$^+$) aufweist, sowie zwei feste Spiegelflächen (5, 5'), von denen eine in dem von der beweglichen Spiegelfläche (4, 4') in der einen Richtung (100' bzw. 100$^+$) reflektierten Lichtstrahlenbündel angeordnet ist und dieses zur Visierlinie (V) hinlenkt, und von denen die andere in dem von der beweglichen Spiegelfläche (4, 4') in der entgegengesetzten Richtung (100$^+$ bzw. 100') reflektierten Lichtstrahlenbündel angeordnet ist und dieses zur Visierlinie (V) von der anderen Seite her hinlenkt.

2. Vorrichtung nach Anspruch 1, dadurch gekennzeichnet, daß die bewegliche Spiegelfläche (4, 4') um eine parallel zu dieser und senkrecht zur bestimmten Richtung (100) verlaufende Achse (40) verdrehbar ist.

3. Vorrichtung nach Anspruch 1, dadurch gekennzeichnet, daß zwei Spiegelflächen (4, 4') vorgesehen sind, die längs einer senkrecht zur bestimmt en Richtung (100) verlaufenden Achse (40) achsparallel, aber in einem Winkel zueinander angeordnet sind, und daß die beiden Spiegelflächen (4, 4') längs der Achse (40) verschiebbar sind.

## Revendications

1. Dispositif pour mesurer la distance entre un point situé sur la surface d'un objet et un plan zéro, qui comporte une source lumineuse destinée à produire un faisceau de rayons lumineux finement focalisé dans une direction qui peut être prédéterminée un dispositif de déviation du faisceau, qui est disposé sur le trajet des rayons du faisceau lumineux, pour dévier périodiquement le faisceau de rayons lumineux hors de la direction prédéterminée ainsi qu'un détecteur photosensible (détecteur avec ligne de visée) qui présente une caractéristique de détection finement focalisée suivant une ligne visée sur laquelle se trouve le point de mesure, la source lumineuse, le dispositif de déviation du faisceau ainsi que les détecteurs avec ligne de visée étant disposés l'un par rapport à l'autre de manière que le faisceau de rayons lumineux dévié rencontre toujours la ligne de visée fixe dans l'espace, caractérisé par le fait qu'il comporte un dispositif de changement de direction du faisceau (4, 5, 4', 5') qui est disposé dans la région du faisceau de rayons lumineux et qui comporte au moins une surface réfléchissante (4, 4'), qui est disposée dans la région du faisceau de rayons lumineux ou peut être déplacée pour y être amenée, ainf de dévier sélectivement le faisceau de rayons lumineux dans des directions opposées (100', 100$^+$) ainsi que deux surfaces réfléchissantes fixes (5, 5') dont l'une est disposée sur le trajet du faisceau de rayons lumineux réfléchi dans une direction (100' ou 100$^+$) par la surface réfléchissante mobile (4, 4') et dévie ce faisceau en direction de la ligne de visée (V), et dont l'autre est disposée sur le trajet du faisceau de rayons lumineux réfléchi dans la direction opposée (100$^+$ ou 100') par la surface réfléchissante mobile (4, 4') et dévie ce faisceau de l'autre côté par rapport à la ligne de visée (V).

2. Dispositif selon la revendication 1, caractérisé par le fait que la surface réfléchissante mobile (4, 4') peut être tournée autour d'un axe (40) parallèlement à celle-ci et perpendiculairement par rapport à la direction déterminée (100).

3. Dispositif suivant la revendication 1, caractérisé par le fait qu'il comporte deux surfaces réfléchissantes (4, 4') qui sont disposées le long d'un axe (40) perpendiculaire à la direction déterminée (100) en étant parallèle à l'axe mais en formant un angle entre eux, et que les deux surfaces réfléchissantes (4, 4') peuvent être déplacés le long de l'axe (40).

## Claims

1. A device for measuring the spacing of a point on the surface of an object from a zero plane, comprising a light source for producing a sharply focussed light beam in a predeterminable direction, a beam deflector arranged in the path of a component of the light beam to periodically deflect the light beam from the determined direction, and a light-sensitive detector (line-of-sight detector) exhibiting a sharply focussed receiving characteristic along a line of sight which contains the measuring point, where the light source with the beam deflector and the line of sight detector are arranged relative to one another in such manner that the deflected light beam always hits the line of sight which is fixed in space, characerised in that there is provided a beam path diverter (4, 5, 4', 5') arranged in the region of the light beam and having at least one movable reflecting surface (4, 4') that is arranged in or can be introduced into the region of the light beam and which serves to alternatively divert the light beam into mutually opposite directions (100', 100), to two fixed reflecting surfaces (5, 5'), of which one is arranged in the light beam reflected by the movable reflecting surface (4, 4') in the one direction (100' or 100+ as the case may be) and directs the light beam to the line of sight (V), and of which the other one is arranged in the light beam reflected by the movable reflecting surface (4, 4') in the opposite direction (100+ or 100' as the case may be) and directs the light beam to the line of sight (V) from the other side.

2. A device as claimed in Claim 1, characerised in that the movable reflecting surface (4, 4') can be rotated about an axis (40) which runs parallel to the reflecting surface perpendicularly to the determined direction (100).

3. A device as claimed in Claim 1, characerised in that there are two reflecting surfaces (4, 4') arranged axially parallel along an axis (40) running perpendicular to the determined direction (100) at an angle to one another, and that the two reflecting surfaces (4, 4') can be displaced along the axis (40).

# FIG 1

FIG 2

FIG 3

FIG 4

FIG 5

FIG 6

# FIG 7

5'
100⁺
5'
PDa''
PDb''
3''
100⁺⁺
1
2
100
4
4'
PDm
100'
PDa'
PDb'
3'
100''
5
Zum
}Steuergerät